# EUROPEAN PATENT APPLICATION

(11) **EP 4 686 580 A1**
(43) Date of publication of application: **04.02.2026**
(21) Application number: 24204458.4
(22) Date of filing: 03.10.2024
(51) Int. Cl.: B44B 5/02, B29C 33/12, B29C 33/30, B29C 33/32, B29C 45/14, B41F 19/02, B44C 1/24

(54) **PATRIX POSITIONING ELEMENT, A MATRIX AND THE METHOD OF EMBEDDING THE POSITIONING ELEMENT IN THE PATRIX**

(30) Priority: 02.08.2024 EP 24192636
(71) Applicant: STAMP Systems Europe Sp. z o.o., 62-080 Sady (PL)
(72) Inventor: Wasiuta, Andrzej, 61-445 Poznan (PL)
(74) Representative: Kondrat, Mariusz

(57) **Abstract**

The object of the invention is a patrix positioning element for making graphic marks on flat sheets for packaging, characterised in that it constitutes a ring (1) with a thickness of 0.2 to 0.8 mm shaped on both sides, made of ferromagnetic material, which has a hole (2) for fitting it into the mould socket (7) Another object of the invention is a mould for making patches containing a positioning element according to the invention, characterised in that, that it is provided with sockets (5) for fixing the position of the rings (1), where each socket (5) is a cylinder facing the apex of the mould socket (7) together with a milled base to a minimum depth equal to the thickness of the rings (1), the number of sockets being equal to the number of rings (1). Another object of the invention is a method for embedding a positioning element according to the invention in a patrix using a mould according to the invention, characterised in that the patrix (6) is made by an overmoulding process comprising the following steps: (a) insertion of at least two rings **(1)** in the cavities **(5)** of the mould **(7)** before the start of the injection cycle when the mould **(7)** of the injection moulding machine is open, (b) start of the injection cycle in which each channel of the mould **(7)** located under the cavity **(5)** with the embedded ring (1) is filled with a plastic-liquid matrix material, (c) adhesive bonding of the rings **(1)** to the made patrix **(6)** taking place by solidification of the matrix material; or the patrix **(6)** is made by pressing includes the following steps: (a') placing at least two rings **(1)** in the sockets **(5),** (b') pouring the matrix material onto the mould **(7)** and covering it with a sheet of fibreglass plate, (c') placing the whole in a heated press and making the patrix
**(6)** by bonding the matrix material, at least two rings **(1)** and a fibreglass sheet, d') leaving the fabricated patrix **shown in Fig 9** to cure.

## Description

The object of the invention is a patrix positioning element for making graphic marks on flat sheets, a matrix for making patrices containing the positioning element and a method for embedding the positioning element in the patrix.

From the Polish patent description PL206750 B1 is known a device for the precise positioning of printed objects having screen printing, offset, hotstamping and/or lacquered printing units, which has a lift and subassemblies with pins for fixing the products to be printed, characterised in that it has a linear electric motor for moving the work carriage, while the body of the linear motor is seated along the skeleton of the device, the skeleton being divided into parts holding the modules, which are the printing units. Whereby the printing modules are the same and consist of a horizontal support plate, in which the sockets for fixing the dies are situated, and the assembly for fixing the filling and scraping squeegee, and on the upper surface of the support plate the assembly for moving the dies is situated.

From the Polish patent application PL427004 A1 there is known a printing form of a printing cylinder of a printing machine used in the process of refining offset printing in the form of a plate having the form of a ring surrounding the surface of the printing cylinder, characterised by the fact that the plate is provided with working sockets, arranged on the surface of the plate, in which there are replaceable elements in the form of stamps flush with the surface of the plate, located in the working sockets from the inner side of the surface of the form. Advantageously, the punch consists of elements consisting of a square base positioned in the lower opening of the working cavity, a working element positioned in the upper opening of the cavity, and a working surface constituting the facing layer of the working element provided with a pattern, the surface of which protrudes above the outer surface of the plate, joined inseparably.

From US patent application US2010289184 A1 is known an apparatus for performing imprint lithography on a substrate having a formable surface, comprising in operation: a mould having a mouldable surface for imprinting a mouldable surface with a pattern having microscale or nanoscale features; a movable positioning element for holding and positioning a substrate or mould with a mouldable surface adjacent to the mouldable surface; and a press for pressing the mould and substrate against the substrate or mould on the positioner by opposing lateral forces that are balanced to minimise the resultant lateral force acting on the positioner.

In the state of the art, methods of making relief on various surfaces are known. For example, from the Polish patent application PL360083 A1, a method of positioning a patrix on a pressure roller of an embossing station, cooperating with an embossing roller provided with a stamp, is known. On the punch of the embossing roller, a temporarily flexible portable patrix, provided with a window for fitting, is fixed. The mobile patrix is transferred from the embossing roller to the pinch roller and fixed to the pinch roller. The mobile patrix is then clamped in a precisely defined position in the patrix window.

From the Polish application description PL403502 A1 is known a method of manufacturing embossed cardboard packaging, in which the surface of the cardboard is printed with offset printing and the embossing of the cardboard is achieved by means of a female mould matrix and a patrix. The working surface of the die is formed by means of a cutter engraving in a plastic, preferably polycarbonate, and the working surface of the patrix is formed by means of a cutter engraving in a plastic, preferably PVC, and during the embossing process a compression layer, preferably formed of hard rubber, is placed under the patrix.

In the state-of-the-art process of embossing sheets of fibrous materials (cardboard), it is necessary for the patrix to cooperate with the die plate. In order to produce the graphic mark on a cardboard sheet using the cold embossing technique, the precise positioning of the embossing element pair patrix - female mould matrix is required, without the introduction of pegging, tongue and groove or any other shaping unit. A prerequisite for the correct execution of the graphic mark is that the element centring the mutual position of the embossing pair does not leave a trace on the sheet after the embossing process.

For this purpose, pins of various diameters and lengths are currently used, which are only inserted into the matrix and the patrix when these components are assembled in the stamping machine. A minimum of 2 positioning pins are required per die/pattern set. The number of pins depends on the size of the patrix.

Once the embossing machine is 'closed', the patrix is transferred to a steel counterplate and adhered to it using double-sided tape. All pins used are then manually removed from the dies, as their falling out during the operation of the machine can cause damage to the graphic design on the patrix plate or the matrix.

The installation and removal of dowels is carried out using standard or special - dedicated - grippers. This is dependent on the type of pin used.

In the process of embossing printed cardboard sheets, it is often necessary to correct the position of the matrix and the patrix before the actual embossing process begins. The printing process and the conditions in which the paper is stored result in frequent changes in size relative to the design according to which the print and the matrices are made.

Correction of the position of the matrices and the patrices requires re-positioning of the patrices relative to the die, for which the positioning pins are used again. The pins have to be removed from the dies each time after mounting the die and transferring the master to the counterplate in the machine. This process can take between 15 and 80 minutes, depending on the number of matrices used.

The positioning methods used to date have disadvantages, not excluding their use, but necessitating the use of additional accessories in the form of positioning pins and grippers or other tools for their assembly/disassembly, which directly increases their handling time.

The purpose of the present invention is to overcome the disadvantages existing in solutions known to the state of the art and to provide a patrix positioning element of simple design and a method of fixing it.

The essence of the invention is a patrix positioning element for making graphic marks on flat sheets for packaging, characterised in that it is a ring with a thickness of 0.2 to 0.8 mm shaped on both sides, made of ferromagnetic material, which has a hole for fitting it into the socket of the patrix mould.

Advantageously, the said sheets for making graphic signs are made of solid, non-porous materials or non-woven, cellulose materials.

Advantageously, the ferromagnetic material is selected from the group including iron, cobalt, nickel, their alloys, carbon steel.

Advantageously, the ring has a thickness of 0.2 to 0.4 mm.

Advantageously, the ring is flat on both sides.

Advantageously, the ring is provided with a crown with at least three arms oriented in the direction tangent to the circle of said ring.

Advantageously, the crown has four arms.

Advantageously, the arms of the crown in the first section are parallel to the surface of the ring and in the second section towards the outer edge of the ring are bent at an acute angle downwards to a depth of not less than half the thickness of the ring, the first section being a distance of between 0.2 mm and half the width of the ring calculated from its inner diameter.

Another object of the invention is a mould for making patrices containing a positioning element according to the invention, characterised in that it is provided with socket for fixing the position of the rings, where each eat is a cylinder facing the apex of the moulds with a milled base to a minimum depth equal to the thickness of the rings, with the number of sockets equal to the number of rings.

Advantageously, the mould according to the invention is provided with a channel milled under each socket overlapping 30-70% of the width of the ring on its outer side.

Advantageously, the mould according to the invention contains from two to eight sockets.

Another essence of the invention is a method for embedding a positioning element according to the invention in a patrix using a mould according to the invention characterised in that the patrix is made by an overmoulding process, and the method comprises the following steps: (a) placing at least two rings in the sockets of the mould before the start of the injection cycle when the mould of the injection moulding machine is open, (b) starting the injection cycle, in which each mould channel located under the socket with the seated ring is filled with a plastic-liquid matrix material, (c) adhesively bonding the rings to the made patrix by solidifying the matrix material; or the patrix is made in a pressing process, and the method comprises the following steps: (a') placing at least two rings in the slots, (b') pouring the matrix material onto the mould and covering it with a sheet of fibreglass sheet, (c') placing the whole in a heated press and making the patrix by bonding the matrix material, at least two rings and the fibreglass sheet, (d') leaving the made patrix to harden.

Advantageously, the patrix is made by an overmoulding process and in step (a) at least two rings have a crown and are placed in the mould sockets with the crowns on the outside of the mould containing the engraved patrix design.

Advantageously, the patrix is made in the pressing process and at least two flat rings on both sides are used in step a').

The invention provides the following benefits:
- The construction of the positioning element according to the invention and the method of embedding it in the patrix using the mould according to the invention is very accurate and allows the positioning of a pair of stamping elements to be determined unambiguously;
- Equipping the positioning element according to the invention with a crown aids its unchanging position in the injection mould before and during injection, avoiding deformation, displacement and underflow of the plastic polymer as a result of a high-pressure jet of molten polymer;
- The invention allows a significant reduction in the machine operator's supervision to determine the position of the pattens, which translates into a saving of up to 80% in machine setup time for stamping tools.

### Detailed description of the invention:

Unless otherwise specified, all technical and scientific terms used in this document shall have the same meaning as commonly understood by a person of ordinary skill in the field of invention.

Whereby, within the meaning of the invention, the phrase "in an embodiment" is to be understood as in one or more embodiments. Furthermore, the features present in the various executions may be combined with each other insofar as they are not mutually exclusive. The descriptions of the executions of the invention in the present application are given by way of illustration and are not intended to limit the scope of the invention. The described implementations include various features, not all of which are required in all implementations of the invention. Some implementations use only some of the features or possible combinations of features. The described variants of the executions of the invention and the executions of the invention comprising different combinations of the features mentioned in the described executions will come to the mind of experts in the field. The scope of the invention is limited only by the claims.

In a first aspect, the invention relates to a patrix positioning element for making graphic marks on flat sheets for packaging, which is a shaped ring on both sides with a thickness of 0.2 to 0.8 mm. The ring is made of ferromagnetic material and has a hole for fitting it into a dedicated mould socket.

The positioning element according to the invention cooperates with a magnet embedded in a matrix during the process of making graphic marks on flat sheets for packaging.

In one embodiment, the magnet cooperating with the ring's self-centring ferromagnetic material is a cylindrical element. Whereby, the number of magnets and their positioning in the dedicated matrix corresponds to the number and positioning of the rings in the patrix. In an advantageous design, the diameter of the magnet is between 3 and 8 mm and its thickness is between 2 and 6 mm.

In one embodiment, the thickness of the ring is 0.2 mm. In another version the ring thickness is 0.3 mm. In another version, the ring thickness is 0.4 mm. In another version, the ring thickness is 0.5 mm. In another execution the thickness of the ring is 0,6 mm. In another execution the thickness of the ring is 0,7 mm. In another version, the ring thickness is 0.8 mm.

In one embodiment, the ferromagnetic material is carbon steel, but other iron alloys can also be used.

The positioning element according to the invention is designed for positioning a polymer patrix for making graphic signs on flat sheets. In an advantageous execution, the sheets are made of solid materials. In another embodiment, the sheets are made of non-porous materials. In another embodiment, the sheets are made of non-woven materials, advantageously cellulosic materials.

In one embodiment, the ring is flat on both sides. The ring, which is flat on both sides, is placed in the mould plate for pressing with either side.

In another embodiment, the ring is fitted with a crown whose arms are oriented tangential to the ring circle.

The ring with the crown is placed in the mould plate with the engraved patrix shape on the shaped side towards the flat closing counter-mould. The crown is intended to position the ring invariably in the mould before and during injection moulding, avoiding deformation, displacement and underflow of the plastic polymer as a result of a high-pressure jet of molten polymer.

In one embodiment, the crown has three arms. In another execution, the crown has four arms. In a favourable execution, the width of each arm is 0.7mm.

The arms of the crown in the first section are parallel to the surface of the ring and in the second section towards the outer edge of the ring are bent at an acute angle downwards to a depth of not less than half the thickness of the ring. Whereby, the first section is a distance of between 0.2 mm and half the width of the ring calculated from its inner diameter.

In one embodiment, the first section is a distance of 0.2 mm from the internal diameter of the ring. In another execution, the first section is a distance of 0.5 mm counted from the inner diameter of the ring. In another embodiment, the first section is a distance of half the width of the ring calculated from the inner diameter of the ring.

In one embodiment, the downward bending of the crown shoulders at the second section occurs to a depth of half the thickness of the ring. In another embodiment, the downward bending of the shoulders of the crown in the second section occurs to a depth of 0.3 mm. In another implementation, the downward bending of the shoulders of the crown in the second section occurs to a depth of 2/3 of the thickness of the ring. In another embodiment, the downward bending of the crown shoulders in the second section occurs to a depth of 3/4 of the ring thickness. In one embodiment, the surface between the crown shoulders is flat and has a thickness of 0.2 mm. In another embodiment, the surface between the crown arms is flat and 0.3 mm. In another embodiment, the surface between the crown arms is flat and 0.4 mm thick.

In a further aspect, the invention relates to a mould for making patties comprising a positioning element according to the invention, which is provided with slots for fixing the position of the rings, wherein each slot is a cylinder facing with its apex the surface of the mould together with a milled base to a minimum depth equal to the thickness of the rings, the number of slots being equal to the number of rings.

In one embodiment, the diameter of the cylindrical socket is equal to the inner diameter of the ring or smaller by a maximum of 0.05mm. In one embodiment, the socket can be between 1 and 4mm wide.

In one embodiment, the mould according to the invention has a socket cylinder fixing the position of the ferromagnetic ring facing the apex of the mould surface together with a milled base to a depth of 0.23 mm. The diameter of the cylinder is equal to the inner diameter of the ring in tolerance - 0.04/+0 mm.

An additional element of the mould construction according to the invention is a channel milled under the ring socket. This channel is filled with a plastic-liquid matrix material during the pressing or overmoulding process, and after it has hardened/solidified, it adhesively connects the ring to the part to be made.

In one embodiment, the channel milled under the ring socket can be between 5 and 10 nm in diameter.

In one embodiment, the mould according to the invention is provided with a channel milled under each socket overlapping 30-70% of the width of the ring on its outer side.

In one embodiment, the channel is between 5 and 10 mm in diameter. In one embodiment, the channel depth ranges from 0.08 to 0.3 mm.

In one embodiment, a channel with an external diameter of 9.5 mm and a width of 1.5 mm is milled around the socket cylinder under the ring socket. The depth of the channel is 0.1 mm.

In one embodiment, the mould according to the invention is provided with two sockets. In another embodiment, the mould according to the invention is provided with three sockets. In another embodiment, the mould according to the invention is provided with four sockets. In another execution, the mould according to the invention is provided with five sockets. In another embodiment, the mould according to the invention is provided with six sockets. In another embodiment, the mould according to the invention is provided with seven sockets. In another embodiment, the mould according to the invention is provided with eight sockets.

In a further aspect, the invention relates to a method for depositing a positioning element according to the invention using a mould according to the invention. In the case of making patrices in the overmolding process, before the start of the injection cycle when the mould of the injection moulding machine is open, the ferromagnetic ring according to the invention is manually placed in the mould cavity with the crown facing outwards of the mould containing the engraved pattern of the patrices. The injection cycle is then started. In this cycle, the channel under the cavity in which the ring is seated is filled with a plastic-liquid matrix material, after it has solidified/cured adhesively bonding the ring to the fabricated patrix.

In the case of making patrices in the pressing process, the patrices are manually placed on a mould with an engraved patrices pattern and a socket for a positioning ferromagnetic element according to the invention by resting it on the cylinder of the socket. The diameter of the cylinder in the socket causes a slight wedging of the ferromagnetic element for pressing. The matrix material is then poured onto the mould which is covered with a sheet of fibreglass plate. The whole is placed in a heated press and allowed to cure. This process fuses the matrix material, the ferromagnetic element and the fibreglass sheet to form the patrix.

Whereby, in both variants of the method according to the invention, the positioning elements according to the invention are positioned as far as possible in the extreme parts of the mould. In this way, in the process of making graphic signs, the patrix will be held by a magnetic force attached to the die equipped with magnets when the patrix is transferred to the counterplate of the machine. As the size of the patches increases, positioning elements are additionally placed in the centre and/or in accessible areas to increase the force maintaining its correct position in the die at the time of transfer of the patches to the counterplate. This principle also applies to the placement of the magnets in the die. Their position is exactly the same as that of the ferromagnetic elements in the patrix.

In one embodiment, the method according to the invention comprises depositing a ring in an overmolded patrix and comprises the following steps: a) placing two rings in two mould sockets before the start of the injection cycle, when the mould of the injection moulding machine is open; b) starting the injection cycle, in which each mould channel located under the socket with the deposited ring is filled with a plastic-liquid matrix material; c) adhesively bonding the rings to the made patrix by solidifying the matrix material. Each of the rings is manually inserted into the mould socket with the crown facing outwards from the mould containing the engraved pattern of the patrix; however, the diameter of the cylindrical socket causes a slight wedging of the ferromagnetic ring for the duration of the overmoulding cycle preventing it from moving.

In another embodiment, the method according to the invention comprises embedding a ring in a patrix made by the overmolding process, and comprises (a) placing five rings in five mold sockets before the start of the injection cycle when the mold of the injection molding machine is open; (b) initiation of an injection cycle, in which each mould socket located under the cavity with the embedded ring is filled with a plastic-liquid matrix material; c) adhesive bonding of the rings to the fabricated patrix by solidification of the matrix material. Each of the rings is manually inserted into the mould socket with the crown facing outwards from the mould containing the engraved pattern of the patrix; however, the diameter of the cylindrical socket causes a slight wedging of the ferromagnetic ring for the duration of the overmoulding cycle preventing it from moving.

In another embodiment, the method of seating the positioning element according to the invention involves the seating of the ring in a patrix made in the pressing process and comprises the following steps: (a') placing two rings, flat on both sides, in the sockets with either side, the diameter of the cylinder in the socket causing the ferromagnetic element to be slightly wedged for pressing; (b') pouring the matrix material onto the mould and covering it with a sheet of fibreglass sheet; (c') placing the whole in a heated press and forming the patrix by fusing the matrix material, the rings and the fibreglass sheet; (d') leaving the formed patrix to harden.

In another embodiment, the method of seating the positioning element according to the invention involves the seating of the ring in a patrix made by the pressing process and comprises the following steps: (a') inserting four rings, flat on both sides, into the sockets with either side, the diameter of the cylinder in the socket causing the ferromagnetic element to be slightly wedged for pressing; (b') pouring the matrix material onto the mould and covering it with a sheet of fibreglass sheet; (c') placing the whole in a heated press and forming the patrix by bonding the matrix material, the rings and the fibreglass sheet; (d') leaving the formed patrix to harden.

The embossing process is carried out by placing a sheet of cardboard between two plates of a press/machine in which a die is mounted together with a patrix. Closing the press with the appropriate force causes the graphic mark to be formed in accordance with the mould and patrix made.

At least 2 magnets in the die and 2 positioning elements according to the invention positioned in the patrix are required. The positioning elements are placed as far as possible in the extreme parts of the patrix, so that the magnetic force keeps the patrix fixed to the die when the patrix is transferred to the counterplate of the machine. As the size of the patches increases, positioning elements are additionally placed in the centre and/or in accessible areas to increase the force maintaining its correct position in the die at the time of transfer of the patty to the counterplate. This principle also applies to the placement of the magnets in the die. Their position is exactly the same as that of the ferromagnetic elements in the patrix.

In an advantageous embodiment, the arrangement of the positioning elements according to the invention in the patrix and the magnets in the dedicated die comprises an arrangement: three magnets in the die and three ferromagnetic elements in the patrix in an arrangement of two at the extremes and one in the middle.

In another advantageous embodiment, the arrangement of the positioning elements according to the invention in the patrix and the magnets in the dedicated matrix comprises an arrangement of: four magnets in the patrix and four ferromagnetic elements in the matrix in an arrangement of three extremes and one in the middle or four in the middle. The arrangement of the positioning elements according to the invention in the patrix and the magnets in the dedicated matrix comprises an arrangement of: five 5 magnets in the matrix and five ferromagnetic elements in the patrix in an arrangement of four extremes and one in the middle. The arrangement of the positioning elements according to the invention in the patrix and the magnets in the dedicated matrix comprises an arrangement of: six to eight magnets in the matrix and six to eight ferromagnetic elements in the patrix in an arrangement of four extremes and two to four in the inner part of the patrix.

The attachment of the matrix depends on the type of machine that is used to perform the stamping. This can be double-sided tape, dedicated mounting brackets, mounting screws or other design elements defined by the machine manufacturer. The patrix, on the other hand, is always glued to the counterplate or carrier using double-sided tape. Once its position has been established with the matrix, the machine closes and the patrix is transferred to the counterplate to which it is glued using double-sided tape.

The invention is illustrated in worked examples and in the drawing, in which fig. 1 shows a positioning element according to the invention in a variant with a crown; fig. 2 shows a permanent magnet placed in a die; fig, 3 shows the positioning element according to the invention in a variant in which the ring is flat on both sides; fig. 4 schematically shows the socket of the positioning element; fig. 5 depicts the socket for the positioning element according to the invention in the form according to the invention; fig. 6 depicts a positioning element according to the invention in a variant with a crown placed in a socket of a mould according to the invention; fig. 7 shows a positioning element according to the invention in a variant with both sides flat placed in a pressing mould; fig. 8 shows a finished patrix containing the positioning element according to the invention; fig. 9 shows an example of the positioning elements according to the invention in the patrix and the location of the magnets in a dedicated matrix.

### Example 1.

The positioning element according to the invention is designed for positioning a polymer patrix 6 for making graphic marks on flat sheets made of solid, non-porous materials or non-woven materials (e.g. cellulose materials).

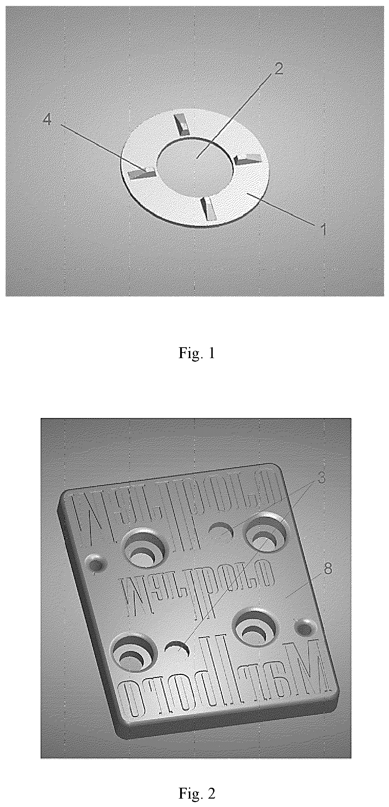

In this non-restrictive manufacturing example, the positioning element according to the invention is a 0.8 mm thick double-sided shaped ring **1** with a four-armed crown **4** (Fig. 1), which has a hole **2** for insertion into a socket **5** of a mould **7** (Fig. 2). The ring **1** cooperates with the magnet **3** embedded in the matrix **8** during the process of making graphic marks on flat sheets for packaging.

The diameter of the magnet ranges from 3 to 8 mm and its thickness ranges from 2 to 6 mm. Whereby, the number of magnets **3** and their positioning in the dedicated matrix **8** corresponds to the number and positioning of rings **1** in the patrix **6.**

Ring **1** is made of a ferromagnetic material, which in this example is carbon steel. However, other ferromagnetic metals can also be used.

The purpose of the crown **4** is to position the ring **1** invariably in the mould **7** before and during injection moulding, avoiding deformation, displacement and underflow of the plastic polymer as a result of the high-pressure molten polymer jet. In this non-limiting manufacturing example, the crown **4** comprises four 0.7mm wide arms, which are oriented in the direction tangent to the circle of the ring **1.**

Whereby the arms of the crown **4** in the first section are parallel to the surface of the ring **1** and in the second section towards the outer edge of the ring **1** are bent at an acute angle downwards towards the outer edge of the ring to a depth of 0.3mm, the first section being a distance of 0.5mm calculated from the inner diameter of the ring **1.** The surface between the arms is flat and 0.2mm thick.

The ring with the crown **4** is placed in the mould plate **7** with the engraved patrix **6** shape side towards the flat closing counterform.

### Example 2.

Positioning element as in example 1 except that ring **1** is made of carbon steel and has a thickness of 0.2 mm. The crown **4,** on the other hand, is provided with three arms which, at a section of 0.2 mm, are parallel to the surface of the ring **1** and, at a second section towards the outer edge of the ring **1,** are bent at an acute angle downwards to a depth of half the thickness of the ring.

### Example 3.

Positioning element as in example 1 except that the arms of the crown **4** are parallel to the surface of the ring **1** in a first section, which is half the width of the ring **1** calculated from its inner diameter, and in a second section towards the outer edge of the ring **1** are bent at an acute angle downwards to a depth of half the thickness of the ring **1.**

### Example 4.

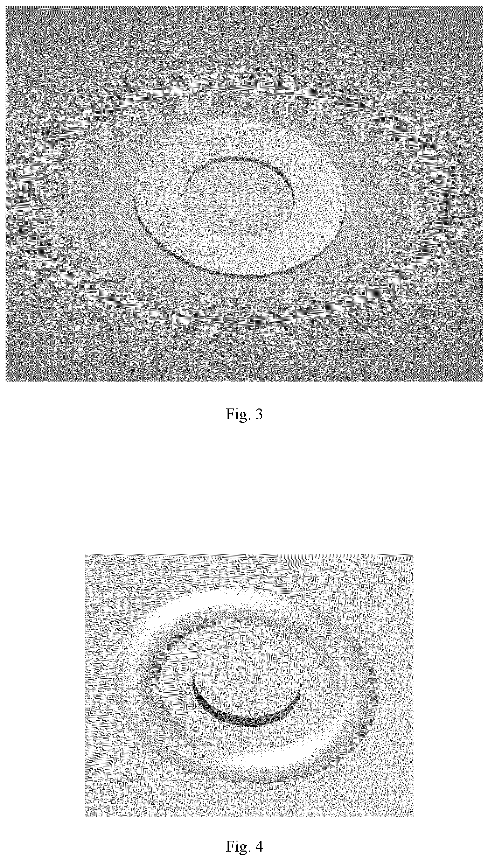

Positioning element as in example 1 except that ring 1 is made of carbon steel, is 0.4 mm thick and is flat on both sides, as shown in fig. 3.

### Example 5.

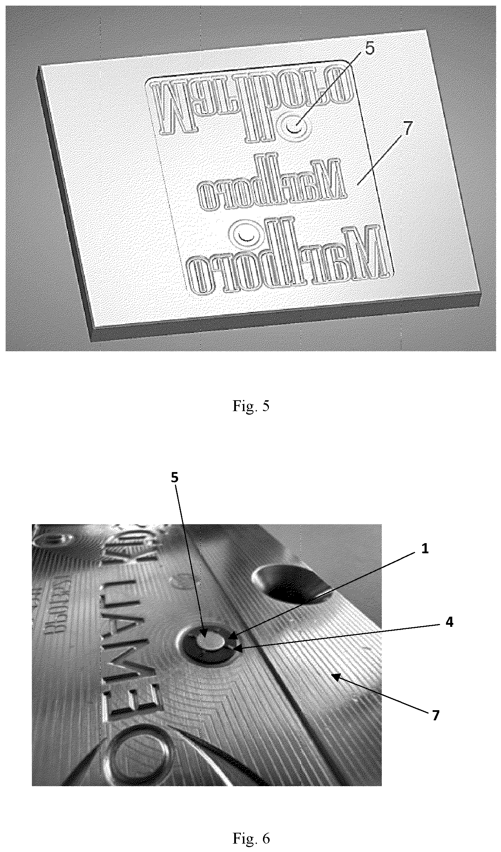

A mould **7** for making patrices **6** containing a positioning element according to the invention - i.e. a ring 1 - is provided with sockets **5** for fixing the position of the rings **1** in the form of a cylinder facing the surface of the mould **7** with a milled base to a depth equal to the thickness of the rings **1,** the number of sockets being equal to the number of rings **1.** In this example of execution, the mould **7** is provided with two sockets **5.** A diagram of the sockets is shown in fig. 4, while the mould **7** with sockets 5 is shown in fig. 5.

In this example of manufacture, the mould **7** is provided with a channel milled under each socket **5** overlapping 30% of the width of the ring **1** on its outer side. Whereby, said channel has a diameter of 5 mm and a depth of 0.08 mm.

### Example 6.

Form as in example 5 except that the channel milled under each socket **5** overlaps 70% of the width of ring **1** on its outer side. Whereby, the channel has a diameter of 10mm and its depth is 0.3mm.

### Example 7.

The mould as in example 5 except that it has a socket cylinder **5** fixing the position of the ferromagnetic ring **1** facing the apex of the mould surface **7** together with a milled base to a depth of 0.23 mm. The diameter of the cylinder is equal to the inner diameter of the ring **1** in tolerance - 0.04/+0 mm.

On the other hand, a channel with an external diameter of 9.5 mm and a width of 1.5 mm is made around the cylinder of the socket **5,** milled under the socket **5** of ring **1.** This channel is filled with a plastic-liquid matrix material during the pressing or overmoulding process, and after it solidifies/cures, it adhesively bonds ring **1** to the workpiece. The depth of the channel is 0.1 mm.

### Example 8.

Form as in example 5 except that it is fitted with five sockets **5.**

### Example 9.

Form as in example 5, except that it is fitted with eight sockets **5.**

### Example 10.

In this example implementation, the method of deposition of the positioning element according to the invention comprises the deposition of the ring **1** in the patrix **6** made by the overmoulding process and comprises the following steps:
a) inserting the two rings **1** in the two sockets **5** of the mould **7** before the injection cycle starts when the mould **7** of the injection moulding machine is open,
b) initiation of an injection cycle, in which each mould channel **7** located under the socket **5** with the embedded ring **1** is filled with a plastic-liquid matrix material,
c) adhesive bonding of the rings **1** to the fabricated patrix **6** by solidification of the matrix material.

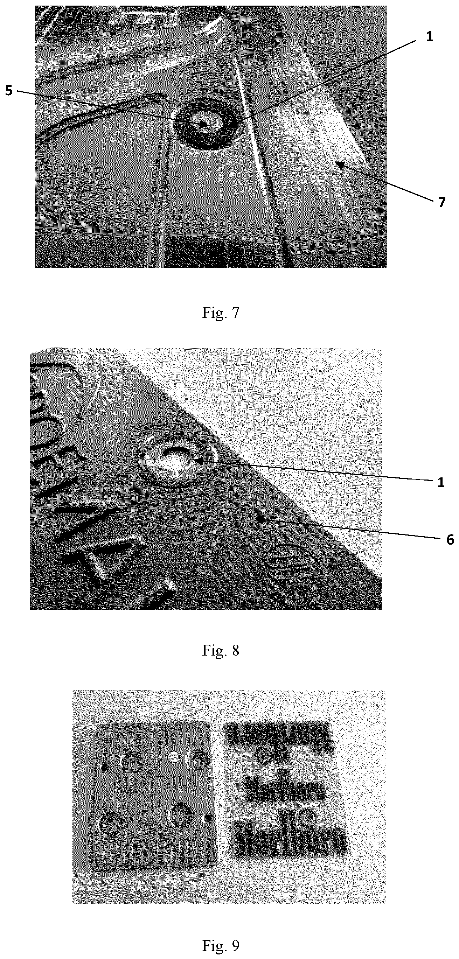

Whereby, as shown in fig. 6, each of the rings **1** is placed in the socket **5** of the mould **7** manually, with the crown **4** facing outwards from the mould **7** containing the engraved patrix design **6.** However, the diameter of the cylindrical socket **5** causes a slight wedging of the ferromagnetic ring **1** for the duration of the overmoulding cycle preventing its movement. The finished patrix is shown in fig. 8, while an example of the distribution of the rings **1** in the example patrix relative to the arrangement of the magnets **3** in the dedicated matrix **8** is shown in fig. 9.

### Example 11.

Method as in example 10 except that step (a) comprises placing the five rings **1** in the five sockets **5** of the mould 7 before the start of the injection cycle when the mould 7 of the injection moulding machine is open.

### Example 12.

In this example implementation, the method of seating the positioning element according to the invention comprises the seating of the ring **1** in the patrix **6** made in the pressing process and comprises the following steps:
(a') inserting the two, bilaterally flat rings **shown in** **Fig. 3** into the sockets **5** with either side (as shown in Fig. 7), with the diameter of the cylinder in the socket causing a slight wedging of the ferromagnetic element for pressing;
(b') pouring the matrix material onto the mould **7** and covering it with a sheet of fibreglass board;
(c') placing the whole in a heated press and producing the patrix **shown in** **Fig 9** by bonding the matrix material, at least two rings **1** and a fibreglass sheet;
(d') leaving the fabricated patrix **shown in** **Fig 9** to cure.

### Example 13.

The method as in example 12 except that step a') comprises placing eight, bilaterally flat rings **1** in eight slots **5** either side, the diameter of the cylinder of the slot **5** causing the ferromagnetic element (ring **1)** to be slightly wedged for pressing.

### List of designations:

- 1 -: ring;
- 2 -: hole;
- 3 -: permanent magnet;
- 4 -: crown;
- 5 -: socket;
- 6 -: patrix
- 7 -: mould;
- 8 -: matrix;

## Claims

1. Positioning element for a patrix for making graphic marks on flat sheets for packaging, **characterised by** being a ring **(1)** 0.2 to 0.8 mm thick, shaped on both sides, made of ferromagnetic material, which has a hole **(2)** for fitting it into the mould cavity (7) of the patrix.

2. Positioning element according to claim. 1, **characterised in that** said marking sheets are made of solid, non-porous materials or non-woven, cellulose materials.

3. Positioning element according to claim. 1 or 2, **namely that** the ferromagnetic material is selected from the group of ferromagnets comprising iron and its alloys

4. Element according to any of the preceding claims. 1 to 3, **characterised in that** the ring (1) has a thickness of 0.2 to 0.4 mm.

5. Element according to any of the preceding claims. 1 to 4, **characterised in that** the ring **(1)** is flat on both sides.

6. Positioning element according to any of the preceding claims. 1 to 4, **characterised in that** the ring **(1)** is provided with a crown **(4)** having at least three arms oriented in the direction tangent to the circle of the ring **(1).**

7. Positioning element according to claim. 6, **characterised in that** the crown **(4)** has four arms.

8. Positioning element according to claims. 6 or 7, **characterised in that** the arms of the crown **(4)** in the first section are parallel to the surface of the ring **(1)** and in the second section towards the outer edge of the ring **(1)** are bent at an acute downward angle to a depth of not less than half the thickness of the ring **(1),** the first section being a distance of 0.2 mm to half the width of the ring **(1)** calculated from its inner diameter.

9. Mould for making patrices containing a positioning element as defined in any of the preceding claims. 1 to 8, **characterised in that** it is provided with sockets **(5)** for fixing the position of the rings **(1),** wherein each socket **(5)** is a cylinder facing with its apex the surface of the mould **(7)** together with a milled base to a minimum depth equal to the thickness of the rings **(1),** the number of sockets being equal to the number of rings **(1).**

10. Mould according to claim. 9, **characterised in that** it is provided with a channel milled under each socket **(5)** overlapping 30-70% of the width of the ring **(1)** on its outer side.

11. Mould according to claim. 10, **characterised in that** the channel has a diameter of 5 to 10 mm and a depth of 0.08 to 0.3 mm.

12. A method of embedding a positioning element as defined in any of the preceding claims. 1 to 8 in a patrix using the mould defined in any of the preceding claims. 9 to 11, **characterised in that** the patrix **(6)** made by the overmoulding process comprises the following steps: (a) insertion of at least two rings **(1)** in the cavities **(5)** of the mould **(7)** before the start of the injection cycle when the mould **(7)** of the injection moulding machine is open, (b) start of the injection cycle, in which each channel of the mould **(7)** located under the cavity **(5)** with the embedded ring **(1)** is filled with a plastic-liquid matrix material, (c) adhesive bonding of the rings **(1)** to the made patrix **(6)** is carried out by solidification of the matrix material; or the patrix **(6)** is made by pressing includes the following steps: (a') placing at least two rings **(1)** in the slots **(5),** (b') pouring the matrix material onto the mould (7) and covering it with a sheet of fibreglass sheet, (c') placing the whole in a heated press and making the patrix **(6)** by bonding the matrix material, at least two rings (1) and the fibreglass sheet, (d') leaving the made patrix **shown in Fig 9** to harden.

13. Method according to claim. 12, **characterised in that** the patrix **(6)** is made by an overmoulding process, and in step (a) at least two rings **(1)** have a crown **(4)** and are placed in the sockets **(5)** of the mould **(7)** with the crowns **(4)** outside the mould **(7)** containing the engraved pattern of the patrix **(6).**

14. Method according to claim. 12, **characterised in that** the patrix **(6)** is made in the pressing process and at least two flat rings **(1)** on both sides are used in step a').
